# EUROPEAN PATENT SPECIFICATION

(11) **EP 3 405 047 B1**
(45) Date of publication and mention of the grant of the patent: **25.12.2019**
(21) Application number: 17700947.9
(22) Date of filing: 16.01.2017
(51) Int. Cl.: A23L 33/18, A23J 3/34

(54) **METHOD AND ARRANGEMENT FOR HYDROLYZING INFANT FORMULA**
METHODE UND VORRICHTUNG ZUR HYDROLYSE BABYMILCH
METHODE ET INSTALLATION POUR L'HYDROLYSE DES FORMULES INFANTILES

(30) Priority: 22.01.2016 SE 1650079
(43) Date of publication of application: 28.11.2018
(73) Proprietor: Tetra Laval Holdings & Finance S.A., 1009 Pully (CH)
(72) Inventor: BÖRJESSON, Erik, 227 32 Lund (SE); SOWTER, Vance, Singapore 469337 (SG); KIMMING, Magnus, 263 65 Viken (SE)
(74) Representative: Tetra Pak - Patent Attorneys SE
(86) International application number: PCT/EP2017/050802
(87) International publication number: WO 2017/125350

(56) References cited:
- EP-A2- 0 566 877
- WO-A1-01/70047
- US-A- 4 427 658
- US-A1- 2006 159 826
- US-A1- 2006 286 308

## Description

### Technical field

The present invention relates to a method and arrangement for hydrolyzing infant formula.

### Background art

Infant formula is needed to provide sustenance as an alternative or addition to human breast milk for millions of children and infants around the world. However, unless proteins in the infant formula are enzymatically hydrolyzed many infants with allergy may have trouble during the digestive process with the infant formula, in some worst case scenarios, the nutritional uptake of the infant formula is negated partly or completely, and these children may starve or be in danger of starving. Hence, the methods and arrangements which hydrolyze infant formulas are very important during the process of manufacturing infant formula.

Typically, the process of manufacturing infant formula entails storing a large amount infant formula in liquid form in a holding tank, measuring the pH of the infant formula, and adding a large amount of lye to raise the pH of the infant formula to a desired pH. The desired pH is determined by the optimum working pH for enzymes which hydrolyze the proteins in the infant formula. The lye is added in a large batch to raise the pH of the infant formula kept in the tank. Hence, the enzymes, if not susceptible to damage from a low pH will be added directly, or if susceptive to damage by a low pH added after the distribution of pH in the storage tank is deemed acceptable. Hence, several problems may occur during this process, the lye may cause clumping of the liquid infant formula, further, the added lye raises the pH in the infant formula kept in the tank heterogeneously and there will be an appreciable amount of time before a homogenous pH distribution can be assumed for the infant formula kept in the tank. Furthermore, the enzymes are also added batchwise and a homogenous distribution of enzymes may not occur until a sufficient amount of time has passed.

Methods and installations for the hydrolysis of infant formula and whey are disclosed in e.g., WO01/70047 and US 4427658.

Hence, there is a generally desire to improve the hydrolyzation of infant formulas to at least reduce the risk of having a non-homogenous mix of hydrolyzed infant formula. Furthermore there is a desire to provide reduced costs and/or time, and improve the performance. There is thus a need for improving the state of the art to provide methods and arrangements for hydrolyzing infant formula which at least partly solves these problems.

### Summary of the invention

It is an object of the present invention to improve the current state of the art, to solve at least some of the above problems, and to provide an improved method and/or arrangement for hydrolyzing infant formula. These and other objects are achieved by a method and arrangement according to the independent claims.

According to a first aspect of the present invention, there is provided a method for hydrolyzing infant formula. The method comprises the steps of providing infant formula in a product pipe, performing a pH measurement of the infant formula in the product pipe, adjusting the pH of the infant formula in the product pipe, based on the measured pH in the product pipe, by inserting a caustic solution to the infant formula in the product pipe, inserting enzymes to the infant formula in the product pipe, and transferring and storing the infant formula in a holding tank.

The present invention is at least partly based on the realization that performing a pH measurement, adjusting the pH and inserting the enzymes to the infant formula may be performed in the product pipe leading up to the holding tank in order to provide an infant formula to the storage tank where a more homogenous enzyme concentration and correct pH is provided before being transferred to the holding tank. Thereby, the caustic solution and enzymes are inserted into a smaller volume of the product pipe where the infant formula flows, and a desired pH and enzyme distribution may be provided in the infant formula before the infant formula reaches the holding tank. This is advantageous as the infant formula may be held a shorter time in the holding tank while still providing a satisfactory hydrolyzation. The hydrolyzed infant formula may be provided downstream of the holding tank to for example heat treatment and possibly drying. Hence, it is understood that after a sufficient holding time in the holding tank, the hydrolyzed infant formula may be subjected to further processes, e.g. heat treatment and possibly a drying process, and provided in a package as a product to be sold. It is thus noted that hydrolyzing infant formula is usually performed with batches, or in batchwise manner, to provide infant formula which has been hydrolyzed by the enzymes while being held in the holding tank.

The enzyme may be added prior to or after the pH measurement and adjustment. Infant formula typically has a pH of about 7 which does not harm the enzymes. The enzymes may preferably be inserted after the insertion of the caustic solution in order to ensure that they are not damaged, and that the suitable pH is provided.

The product pipe extends into the holding tank in order to transport, e.g. transfer and refill or fill, infant formula into the holding tank. The product pipe may thus be understood as an infeed pipe to the holding tank. The pH measurement, adjusting the pH of the infant formula, and inserting the enzymes are thus all performed outside the holding tank.

Infant formula herein generally refers to infant formula produced using cow milk, and for infants of the age 0-6 months, 6-12 months, and children aged 12-36 months. It is of course possible to use the present invention for infant formulas produced using milk from other animals. The difference for the ages of children is that a higher protein concentration is provided for older infants or children. Typically, the protein concentration for infants aged 0-6 months is 13% whereas the protein concentration is about 20% for children aged 12-36 months and the protein concentration for infants 6-12 months is somewhere in between those values.

The enzymes used with the present invention are typically protease enzymes. For example, the proteases Alcalase, Savinase, Trypsin from Novozyme may be used with the present invention.

The amount and/or concentration of the caustic solution added or inserted to the product pipe to adjust the pH of the infant formula of course depends on the amount of infant formula flowing in the product pipe. Hence, the amount and/or concentration of the caustic solution may be adapted to different circumstances. The person skilled in the art knows how to perform such calculations and control the amount and/or concentration of the caustic solution.

In at least one exemplary embodiment, the infant formula is held in the holding tank for 30-120 minutes, preferably 15-60 minutes, to become hydrolyzed. By using a process according to the present invention, the holding time in the holding tank may be reduced compared to the conventional process. In the conventional process described in the background, the time for filling a holding tank of approximately 20 000 liters is about one hour, the addition and mixing of a caustic solution takes about one hour, the addition and mixing of enzymes takes about one hour, and the enzymes are allowed to hydrolyze the infant formula for about one to two hours to ensure sufficient hydrolyzation before the tank is emptied. Hence, the conventional process takes at least four hours, oftentimes more. Using the present invention, the hydrolyzation may start to occur immediately in the product pipe. Therefore, the filling holding tank takes about one hour, and the infant formula is held in the storage tank for 30-120 minutes or 15-60 minutes to ensure sufficient hydrolyzation before the tank is emptied. For example, the infant formula may be held in the holding tank for less than 60 minutes. Hence, using the present invention, the hydrolyzation process may be performed in less than three hours, or even less than two hours.

In at least one exemplary embodiment, the method may further comprise the step of agitating the infant formula in the holding tank. By agitating the infant formula kept in the holding tank, the distribution of pH and enzymes may be stirred and mixed in order to promote the activation of the enzymes and/or to avoid sedimentation.

In at least one exemplary embodiment, the step of adjusting the pH of the infant formula adjusts the pH of the infant formula to a pH range of 7-10, preferably 7.5-9.5 and more preferably 7.7-8.5. The ranges given above may be optimal for the types of enzymes used during the process.

In at least one exemplary embodiment, the amount of enzyme inserted in the product pipe is in the range of one part enzyme to 400-800 parts infant formula, preferably one part enzyme to 500-700 parts infant formula, more preferably one part enzyme to 550-650 parts infant formula. It should, however, be noted that the amount of enzymes could be inserted in other amounts than the examples above.

In at least one exemplary embodiment, the caustic solution inserted to the infant formula is lye, such as sodium hydroxide (NaOH) or potassium hydroxide (KOH). For example, lye having NaOH may be used since these elements may be left in the hydrolyzed infant formula as Na is edible.

In at least one exemplary embodiment, the amount of caustic solution inserted to the infant formula in the product pipe is in the range of 1 ml-1l per liter of infant formula. For example, the amount of caustic solution inserted to the infant formula may be in the range of 1-5ml per liter of infant formula.

In at least one exemplary embodiment, the method may further comprise the steps of circulating a portion of infant formula from the holding tank in a pH control loop, performing a pH measurement of the infant formula in the pH control loop, and adjusting the pH of the infant formula in the pH control loop, based on the measured pH in the control loop, by inserting a caustic solution to the control loop. The pH control loop may be understood as a continuously, or intermittently, circulating loop where a portion of the infant formula is circulated to control the pH in order to ensure that a desired pH is kept in the holding tank during the hydrolyzation process. Hence, a portion of the infant formula is drawn through the control loop while the pH is continuously measured and adjusted, if needed.

According to a second aspect of the present invention, there is provided an arrangement for hydrolyzing infant formula, the arrangement comprises a product pipe, a holding tank having an inlet from the product pipe, a pH sensor arranged to measure the pH of an infant formula in the product pipe, a first addition inlet arranged to insert a caustic solution to the product pipe, a second addition inlet arranged to insert an enzyme to the product pipe.

Effects and features of these further aspects of the present invention are largely analogous to those described above in connection with the first aspect of the invention. Embodiments mentioned in relation to the first aspect of the present invention are largely compatible with the second aspect of the invention. Hence, the product pipe is arranged on the outside of the holding tank.

In at least one exemplary embodiment, the arrangement further comprises an agitator in the holding tank.

In at least one exemplary embodiment, the arrangement further comprises a control loop, the control loop comprises an inlet and an outlet in the holding tank, and a pump for pumping infant formula through the control loop, a pH sensor for measuring the pH of the infant formula in the control loop and pH adjusting means. The pH sensor and the pH adjusting means may be similar components as the components utilized for the product pipe.

In at least one exemplary embodiment, the holding tank is further connected to a heat treatment unit.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements.
Figure 1 is a schematic view of an arrangement for hydrolyzing infant formula in accordance with at least one embodiment of the invention.
Figure 2 is a schematic view of an arrangement for hydrolyzing infant formula in accordance with at least one embodiment of the invention;
Figure 3 is a flow chart illustrating a method for hydrolyzing an infant formula in accordance with at least one embodiment of the invention.
Figure 4 is a flow chart illustrating a method for hydrolyzing infant formula in accordance with at least one embodiment of the invention;

### Detailed description of preferred embodiments of the invention

In the present detailed description, embodiments of an arrangement for hydrolyzing infant formula according to the present invention are mainly discussed with reference to schematic views showing an arrangement according to various embodiments of the invention. It should be noted that this by no means limits the scope of the invention, which is also applicable in other circumstances for instance with other types or variants of devices than the embodiments shown in the appended drawings. Further, that specific components are mentioned in connection to an embodiment of the invention does not mean that those components cannot be used to an advantage together with other embodiments of the invention. The invention will now be described with reference to the enclosed drawings where first attention will be drawn to the structure, and secondly to the function.

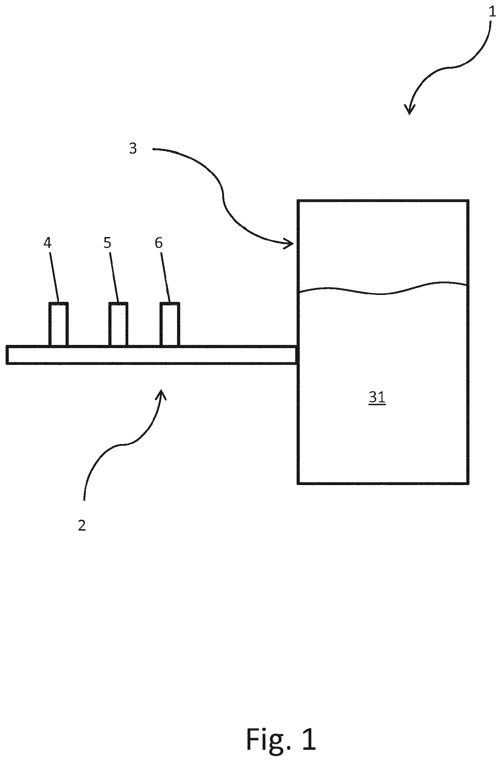

Figure 1 shows a schematic view of an arrangement 1 for hydrolyzing infant formula in accordance with one embodiment of the present invention. The arrangement 1 comprises a product pipe 2 and a holding tank 3. In the holding tank 3 there is liquid infant formula 31 illustrated. The infant formula 31 in the tank 3 has been transferred there via the product pipe 2, the holding tank 3 thus has an inlet from the product pipe 2. It should of course be noted that a complete arrangement for hydrolyzing infant formula comprises more components than the ones shown herein in order to properly function such as pumps, valves and other additional components. For example, a tank storing or supplying the infant formula prior to the product pipe 2 is not shown, or tanks storing caustic solution or enzymes fluidly connected to the a first and second addition inlet respectively. However, such components are left out as many alternatives are known in the art and the focus of the present invention is the overall structure of the arrangement 1. The holding tank 3 may e.g. hold about 20 000 liters of infant formula 31.

The arrangement 1 further comprises a pH sensor 4, arranged to measure the pH of the infant formula in the product pipe 2. The pH sensor may be any suitable pH sensor known in the art. Downstream of the pH sensor 4, a first addition inlet 5 is arranged to insert a caustic solution to the product pipe and thus the infant formula. Downstream of the first addition inlet 5, a second addition inlet is arranged to insert an enzyme to the product pipe 2 and the infant formula flowing in the product pipe. The first and/or second addition inlet 5, 6 may be embodied by a Tetra Aldose, Tetra Tetra Alblend or any similar equipment.

The pH sensor 4, first addition inlet 5 and second addition inlet 6 are all mounted on the product pipe 2, and are in fluid connection with the infant formula flowing in the product pipe 2.

The pH sensor 4 may be connected, e.g. linked, to the first addition inlet 5 in order to control the amount of caustic solution which is inserted into the product pipe 2 by the first addition inlet 5. Alternatively, the arrangement 1 may comprise a control unit (not shown) connected at least to the pH sensor 4 and the first addition inlet 5. The control unit may control the amount of caustic solution which is inserted into the product pipe 2 by the first addition inlet 5. Optionally, such a control unit may also control the second addition inlet and the amount enzymes which are added to the infant formula in the product pipe 2.

The amount of infant formula flowing in the product pipe 2 may be substantially constant as the holding tank 3 is filled with infant formula, therefore the amount of caustic solution which is added or inserted, during operation, via the first addition inlet 5 may also be understood as constant if the concentration of the caustic solution is constant. Otherwise, either the amount of caustic solution, or the concentration of the caustic solution may be varied to provide a desired pH of the infant formula. Further, the amount of enzymes inserted in the product pipe is in the range of one part enzyme to 400-800 parts infant formula, preferably 500-700 parts infant formula, more preferably 550-650 parts infant formula. It should, however, be noted that the amount of enzymes could be inserted in other amounts than the examples above.

In use, infant formula is provided flowing through the product pipe 2. The pH sensor 4 continuously or intermittently performs pH measurements of the infant formula in the product pipe 2. Hence, the pH sensor 4 may perform a measurement at least once every second or more often. The pH measurements by the pH sensor 4 are used to control the amount of caustic solution which is added to the infant formula in the product pipe 2 via the first addition inlet 5. Thereby, a specific pH of the infant formula flowing in the product pipe 2 is provided. For example, the pH of the infant formula flowing in the product pipe may be about 7, a caustic solution is inserted to the product pipe to raise the pH to be within the range of 7.5 to 8.5. After the caustic solution has been inserted by the first addition inlet 5, the second addition inlet 6 inserts enzymes into the infant formula flowing in the product pipe 2. The above process is performed until the holding tank is full, or the level in the holding tank reaches a predetermined level. After which the infant formula is held in the holding tank 3 such that the enzymes are allowed to hydrolyze the infant formula. The infant formula 31 may be held in the holding tank 3 for about 30-120 minutes, or for about 15-90 minutes. Hence, the infant formula 31 is hydrolyzed in batches.

As a note, after the infant formula 31 is hydrolyzed, e.g. by being held in the holding tank 3 for a sufficient amount of time, the hydrolyzed infant formula 31 may be provided to a heat treatment unit (not shown) to which the holding tank 3 is connected. The heat treatment unit heat treats the infant formula, after which it may be packaged and supplied as a product, or alternatively be dried and supplied in a packaged powder form.

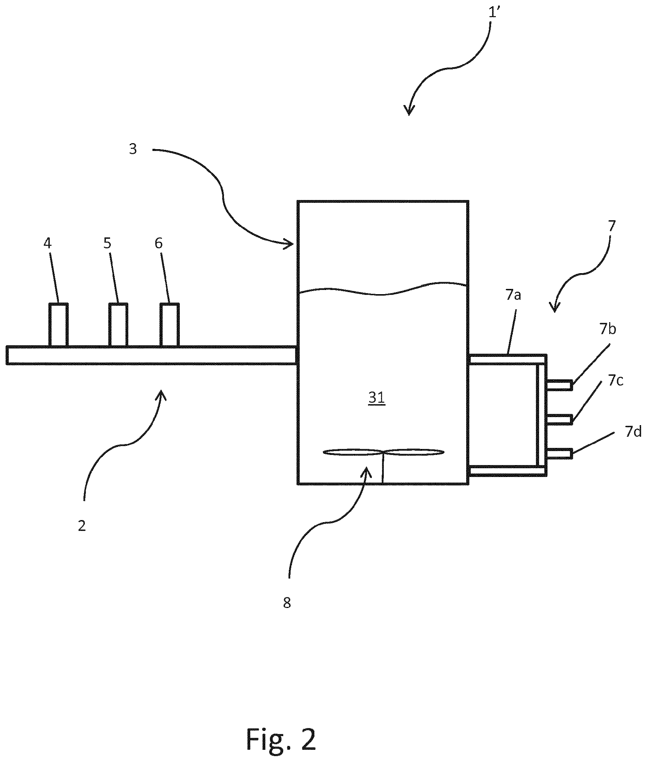

Figure 2 shows an arrangement 1' for hydrolyzing infant formula in accordance with at least one embodiment of the invention. The arrangement 1' is largely similar to the arrangement shown in figure 1, and the same reference numerals refer to the same or similar elements and components. For the sake of brevity, only the elements which differ from the embodiment shown in figure 1 are described below.

Compared to the embodiment shown in figure 1, the arrangement 1' further comprises a control loop 7. The control loop 7 comprises an inlet and an outlet in the holding tank, fluidly connected via a control loop pipe 7a. The control loop further comprises a pump 7b for pumping, e.g. circulating, the infant formula through the control loop pipe 7a, a pH sensor 7c for measuring the pH of the infant formula in the control loop and pH adjusting means 7d. The pH sensor 7c and the pH adjusting means 7d may be the same components work in substantially the same manner as described above for the pH sensor 4, and the first addition inlet 5. Hence, in use, while the infant formula 31 is kept in the holding tank 3 in order to become hydrolyzed, the pump 7b is operated to circulate infant formula through the control loop 7. The ph sensor 7c performs pH measurements continuously or intermittently on the infant formula circulating in the control loop 7, and if needed, due to the infant formula deviating from a target pH, the pH adjusting means 7d are controlled by the pH sensor 7c to insert a caustic solution to reach the target pH. Alternatively, the arrangement 1' may comprise a control unit (not shown) connected at least to the pH sensor 7c and the pH adjusting means 7d. The control unit may control the amount of caustic solution which is inserted into the control loop 7 by the pH adjusting means 7d. Optionally, such a control unit may also control the operation of the pump 7b. The caustic solution used for the control loop 7 may be similar, as in type and concentration, to the caustic solution used for the product pipe.

The arrangement 1' optionally further comprises an agitator 8 in the tank 3. The agitator 8 may be as shown, a propeller or rotor of some kind which rotates in order to stir and mix the infant formula 31 while the infant formula hydrolyzed in the holding tank 3. The agitator 8 may of course be any other kind of agitator known in the art.

In use, compared to the arrangement 1 shown in figure 1, the arrangement 1' further operates the control loop 7 to circulate the infant formula 31 held in the holding tank 3 to control and possibly adjust the pH of the infant formula to provide a desired pH which is optimal for the enzymes inserted to the infant formula. In the case that the arrangement 1' also comprises an agitator 8, the agitator may be operated to stir and mix the infant formula 31 to further provide a homogenous distribution of pH and enzymes in the infant formula 31 held in the holding tank 3 over time.

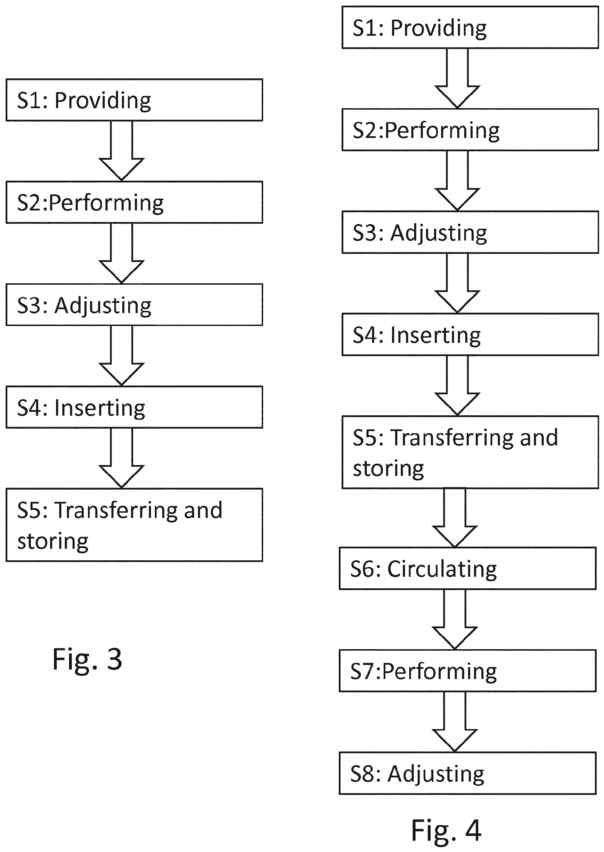

Figure 3 shows a flow chart of an exemplary method for hydrolyzing infant formula in according with at least one embodiment of the invention. The method may, but need not, be performed utilizing an arrangement as shown in figure 1.

The method comprises a first step, S1, of providing a liquid infant formula in a product pipe. The infant formula typically has a pH at this stage of about 7.

The next step, S2, comprises performing a pH measurement of the infant formula in the product pipe.

The next step, S3, comprises adjusting the pH of the infant formula in the product pipe, based on the measured pH in the product pipe, by inserting a caustic solution to the infant formula in the product pipe. The caustic solution may be lye, such as sodium hydroxide (NaOH) or potassium hydroxide (KOH). The desired pH of the infant formula may be in the range of pH 7.5-8.5.

The next step, S4, comprises inserting enzymes to the infant formula in the product pipe. It should be noted that the step of inserting enzymes to the infant formula in the product pipe may be performed prior to the step of adjusting the pH, or even prior to the step of performing pH measurement. The enzymes used or protease enzymes, and the amount of enzyme inserted in the product pipe is in the range of one part enzyme to 400-800 parts infant formula, preferably 500-700 parts infant formula, more preferably 550-650 parts infant formula. The enzymes used with the present invention are typically protease enzymes. For example, the proteases Alcalase, Savinase, Trypsin from Novozyme may be used with the present invention.

The subsequent step, S5, comprises transferring and storing the infant formula in a holding tank.

The infant formula may be kept or stored in the holding tank for about 30-120 minutes, or for about 15-90 minutes, to ensure that the proteins in the infant formula are sufficiently hydrolyzed. Optionally, the method may comprise agitating the infant formula in the holding tank the time the infant formula is kept in the tank to improve the mixing of enzymes and avoiding local concentration having higher or lower pH in the infant formula.

Figure 4 shows a flow chart of an exemplary method for hydrolyzing infant formula in according with at least one embodiment of the invention. The method may, but need not, be performed utilizing an arrangement as shown in figure 1'. Compared to the method described in conjunction with figure 3 the method in figure 4 further comprises three steps.

During the time the infant formula is held in the holding tank, a step of circulating, S6, a portion of infant formula from the holding tank, in a pH control loop is performed.

In the next step a pH measurement is performed, S7, of the infant formula in the pH control loop.

In the subsequent step, S8, the pH of the infant formula in the pH control loop is adjusted, based on the measured pH in step S7, by inserting a caustic solution to the control loop.

The steps S6-S8 may be understood as the operation of the control loop 7 described in conjunction with figure 2.

Optionally, the method may comprise agitating the infant formula in the holding tank the time the infant formula is kept in the tank to improve the mixing of enzymes and avoiding local concentration having higher or lower pH in the infant formula.

## Claims

1. A method for hydrolyzing infant formula, said method comprising the steps of:
- providing (S1) infant formula in a product pipe;
- performing (S2) a pH measurement of the infant formula in the product pipe;
- adjusting (S3) the pH of the infant formula in the product pipe, based on the measured pH in the product pipe, by inserting a caustic solution to the infant formula in the product pipe;
- inserting (S4) enzymes to the infant formula in the product pipe; and
- transferring and storing (S5) the infant formula in a holding tank.

2. A method for hydrolyzing infant formula according to claim 1, wherein said infant formula is held in said holding tank for 30-120 minutes, preferably 15-90 minutes, to become hydrolyzed.

3. A method for hydrolyzing infant formula according to claim 1 or 2, further comprising the step of agitating the infant formula in said holding tank.

4. A method for hydrolyzing infant formula according to any one of the preceding claims, wherein said step of adjusting the pH of the infant formula adjusts the pH of the infant formula to a pH range of 7-10, preferably 7.5-9.5 and more preferably 7.7-8.5.

5. A method for hydrolyzing infant formula according to any one of the preceding claims, wherein the amount of enzyme inserted in the product pipe is in the range of one part enzyme to 400-800 parts infant formula, preferably one part enzyme to 500-700 parts infant formula, more preferably one part enzyme to 550-650 parts infant formula.

6. A method for hydrolyzing infant formula according to any one of the preceding claims, wherein the caustic solution inserted to the infant formula is lye, such as sodium hydroxide (NaOH) or potassium hydroxide (KOH).

7. A method for hydrolyzing infant formula according to any one of the preceding claims, further comprising the steps of:
- circulating (S6) a portion of infant formula from the holding tank, in a pH control loop;
- performing (S7) a pH measurement of the infant formula in the pH control loop;
- adjusting (S8) the pH of the infant formula in the pH control loop, based on the measured pH in the control loop, by inserting a caustic solution to the control loop.

8. An arrangement (1, 1') for hydrolyzing infant formula, said arrangement comprising:
- a product pipe (2);
- a holding tank (3) having an inlet from the product pipe;
- a pH sensor (4) arranged to measure the pH of an infant formula in the product pipe (2);
- a first addition inlet (5) arranged to insert a caustic solution to said product pipe (2);
- a second addition inlet (6) arranged to insert an enzyme to said product pipe (2).

9. The arrangement (1') for hydrolyzing infant formula according to claim 8, further comprising an agitator (8) in the holding tank (3).

10. The arrangement for manufacturing hydrolyzed infant formula according to claim 8 or 9, further comprising a control loop (7), said control loop comprising an inlet and an outlet in the holding tank (3), and a pump (7b) for pumping infant formula through the control loop (7), a pH sensor (7c) for measuring the pH of the infant formula in the control loop and a pH adjusting means (7d).

11. The arrangement (1, 1') for manufacturing hydrolyzed infant formula according to any one of claims 8-10, wherein the holding tank is further connected to a heat treatment unit.

## Patentansprüche

1. Verfahren zum Hydrolysieren von Säuglingsanfangsnahrung, wobei das Verfahren die folgenden Schritte umfasst:
- Bereitstellen (S1) von Säuglingsanfangsnahrung in einer Produktleitung;
- Durchführen (S2) einer pH-Messung der Säuglingsanfangsnahrung in der Produktleitung;
- Einstellen (S3) des pH-Werts der Säuglingsanfangsnahrung in der Produktleitung, auf Grundlage des gemessenen pH-Werts in der Produktleitung, indem der Säuglingsanfangsnahrung in der Produktleitung eine kaustische Lösung beigefügt wird;
- Beifügen (S4) von Enzymen zu der Säuglingsanfangsnahrung in der Produktleitung; und
- Überführen und Lagern (S5) der Säuglingsanfangsnahrung in einen Speicherbehälter.

2. Verfahren zum Hydrolysieren von Säuglingsanfangsnahrung gemäß Anspruch 1, wobei die Säuglingsanfangsnahrung 30 bis 120 Minuten lang, vorzugsweise 15 bis 90 Minuten lang, in dem Speicherbehälter aufbewahrt wird, um eine Hydrolyse zu erfahren.

3. Verfahren zum Hydrolysieren von Säuglingsanfangsnahrung gemäß Anspruch 1 oder 2, wobei es weiterhin den Schritt des Rührens der Säuglingsanfangsnahrung in dem Speicherbehälter umfasst.

4. Verfahren zum Hydrolysieren von Säuglingsanfangsnahrung gemäß einem beliebigen der vorhergehenden Ansprüche, wobei im Rahmen des Schritts des Einstellens des pH-Werts der Säuglingsanfangsnahrung der pH-Wert der Säuglingsanfangsnahrung auf einen pH-Bereich von 7 bis 10, vorzugsweise von 7,5 bis 9,5, und insbesondere von 7,7 bis 8,5, eingestellt wird.

5. Verfahren zum Hydrolysieren von Säuglingsanfangsnahrung gemäß einem beliebigen der vorhergehenden Ansprüche, wobei die Menge an Enzym, welche der Produktleitung beigefügt wird, im Bereich von einem Teil an Enzym auf 400 bis 800 Teile Säuglingsanfangsnahrung, vorzugsweise von einem Teil an Enzym auf 500 bis 700 Teile Säuglingsanfangsnahrung, insbesondere von einem Teil an Enzym auf 550 bis 650 Teile Säuglingsanfangsnahrung, liegt.

6. Verfahren zum Hydrolysieren von Säuglingsanfangsnahrung gemäß einem beliebigen der vorhergehenden Ansprüche, wobei es sich bei der kaustischen Lösung, welche der Säuglingsanfangsnahrung beigefügt wird, um eine Lauge handelt, wie etwa um Natriumhydroxid (NaOH) oder Kaliumhydroxid (KOH).

7. Verfahren zum Hydrolysieren von Säuglingsanfangsnahrung gemäß einem beliebigen der vorhergehenden Ansprüche, wobei es weiterhin die folgenden Schritte umfasst:
- Umwälzen (S6) einer Teilmenge der Säuglingsanfangsnahrung aus dem Speicherbehälter in pH-Überwachungsschleife;
- Durchführen (S7) einer pH-Messung der Säuglingsanfangsnahrung in der pH-Überwachungsschleife;
- Einstellen (S8) des pH-Werts der Säuglingsanfangsnahrung in der pH-Überwachungsschleife, auf Grundlage des gemessenen pH-Werts in der Überwachungsschleife, indem der Überwachungsschleife eine kaustische Lösung beigefügt wird.

8. Anordnung (1, 1') zum Hydrolysieren von Säuglingsanfangsnahrung, wobei die Anordnung Folgendes umfasst:
- eine Produktleitung (2);
- einen Speicherbehälter (3) mit einer Einlassöffnung ausgehend von der Produktleitung;
- einen pH-Sensor (4), der dafür eingerichtet ist, den pH-Wert einer Säuglingsanfangsnahrung in der Produktleitung (2) zu messen;
- eine erste Einlassöffnung (5) zum Zusetzen, die dafür eingerichtet ist, der Produktleitung (2) eine kaustische Lösung beizufügen;
- eine zweite Einlassöffnung (6) zum Zusetzen, die dafür eingerichtet ist, der Produktleitung (2) ein Enzym beizufügen.

9. Anordnung (1') zum Hydrolysieren von Säuglingsanfangsnahrung gemäß Anspruch 8, wobei sie weiterhin ein Rührwerk (8) in dem Speicherbehälter (3) umfasst.

10. Anordnung zum Herstellen hydrolysierter Säuglingsanfangsnahrung gemäß Anspruch 8 oder 9, wobei sie weiterhin eine Überwachungsschleife (7), wobei diese Überwachungsschleife eine Einlassöffnung und eine Auslassöffnung in den Speicherbehälter (3) umfasst, sowie eine Pumpe (7b) zum Pumpen von Säuglingsanfangsnahrung durch die Überwachungsschleife (7), einen pH-Sensor zum Messen des pH-Werts der Säuglingsanfangsnahrung (7c) in der Überwachungsschleife und ein Mittel (7d) zum Einstellen des pH-Werts umfasst.

11. Anordnung (1, 1') zum Herstellen hydrolysierter Säuglingsanfangsnahrung gemäß einem beliebigen der Ansprüche 8 bis 10, wobei der Speicherbehälter weiterhin mit einer Wärmebehandlungseinheit verbunden ist.

## Revendications

1. Méthode d'hydrolyse d'une préparation pour nourrissons, ladite méthode comprenant les étapes consistant à :
- mettre à disposition (S1) une préparation pour nourrissons dans une conduite de procédé ;
- effectuer (S2) une mesure de pH de la préparation pour nourrissons dans la conduite de procédé ;
- ajuster (S3) le pH de la préparation pour nourrissons dans la conduite de procédé, sur la base du pH mesuré dans la conduite de procédé, par l'insertion d'une solution caustique dans la préparation pour nourrissons dans la conduite de procédé ;
- insérer (S4) des enzymes dans la préparation pour nourrissons dans la conduite de procédé ; et
- transférer et stocker (S5) la préparation pour nourrissons dans une cuve de stockage.

2. Méthode d'hydrolyse d'une préparation pour nourrissons selon la revendication 1, dans laquelle ladite préparation pour nourrissons est maintenue dans ladite cuve de stockage pendant 30-120 minutes, préférablement 15-90 minutes, afin d'être hydrolysée.

3. Méthode d'hydrolyse d'une préparation pour nourrissons selon la revendication 1 ou 2, comprenant en outre l'étape consistant à agiter la préparation pour nourrissons dans ladite cuve de stockage.

4. Méthode d'hydrolyse d'une préparation pour nourrissons selon l'une quelconque des revendications précédentes, dans laquelle ladite étape d'ajustement du pH de la préparation pour nourrissons ajuste le pH de la préparation pour nourrissons dans une plage de pH de 7-10, préférablement 7,5-9,5 et plus préférablement 7,7-8,5.

5. Méthode d'hydrolyse d'une préparation pour nourrissons selon l'une quelconque des revendications précédentes, dans laquelle la quantité d'enzyme insérée dans la conduite de procédé se trouve dans la plage d'une partie d'enzyme pour 400-800 parties de préparation pour nourrissons, préférablement d'une partie d'enzyme pour 500-700 parties de préparation pour nourrissons, plus préférablement d'une partie d'enzyme pour 550-650 parties de préparation pour nourrissons.

6. Méthode d'hydrolyse d'une préparation pour nourrissons selon l'une quelconque des revendications précédentes, dans laquelle la solution caustique insérée dans la préparation pour nourrissons est constituée de lessive de soude, telle que de l'hydroxyde de sodium (NaOH) ou de l'hydroxyde de potassium (KOH).

7. Méthode d'hydrolyse d'une préparation pour nourrissons selon l'une quelconque des revendications précédentes, comprenant en outre les étapes consistant à :
- faire circuler (S6) une portion de préparation pour nourrissons dans la cuve de stockage, dans une boucle de contrôle de pH ;
- effectuer (S7) une mesure de pH de la préparation pour nourrissons dans la boucle de contrôle de pH ;
- ajuster (S8) le pH de la préparation pour nourrissons dans la boucle de contrôle de pH, sur la base du pH mesuré dans la boucle de contrôle, par l'insertion d'une solution caustique dans la boucle de contrôle.

8. Dispositif (1, 1') destiné à l'hydrolyse d'une préparation pour nourrissons, ledit dispositif comprenant :
- une conduite de procédé (2) ;
- une cuve de stockage (3) ayant une entrée à partir de la conduite de procédé ;
- un capteur de pH (4) disposé pour mesurer le pH d'une préparation pour nourrissons dans la conduite de procédé (2) ;
- une première entrée d'addition (5) disposée pour insérer une solution caustique dans ladite conduite de procédé (2) ;
- une deuxième entrée d'addition (6) disposée pour insérer une enzyme dans ladite conduite de procédé (2).

9. Dispositif (1') destiné à l'hydrolyse d'une préparation pour nourrissons selon la revendication 8, comprenant en outre un agitateur (8) dans la cuve de stockage (3).

10. Dispositif de fabrication d'une préparation pour nourrissons hydrolysée selon la revendication 8 ou 9, comprenant en outre une boucle de contrôle (7), ladite boucle de contrôle comprenant une entrée et une sortie dans la cuve de stockage (3), et une pompe (7b) pour pomper la préparation pour nourrissons dans la boucle de contrôle (7), un capteur de pH (7c) pour mesurer le pH de la préparation pour nourrissons dans la boucle de contrôle et un moyen d'ajustement du pH (7d).

11. Dispositif (1, 1') destiné à la fabrication d'une préparation pour nourrissons hydrolysée selon l'une quelconque des revendications 8-10, dans lequel la cuve de stockage est en outre reliée à une unité de traitement thermique.
